# FASCICULE DE BREVET EUROPEEN

(11) **EP 2 655 088 B1**
(45) Date de publication et mention de la délivrance du brevet: **19.08.2015**
(21) Numéro de dépôt: 11794152.6
(22) Date de dépôt: 09.12.2011
(51) Int. Cl.: B60C 1/00, C08K 3/22, C08L 23/28, C08K 5/01

(54) **COUCHE ETANCHE AUX GAZ DE GONFLAGE COMPRENANT UN OXYDE METALLIQUE COMME AGENT DE RETICULATION**
AUFBLASGASDICHTE SCHICHT MIT EINEM METALLOXID ALS VERNETZUNGSMITTEL
INFLATION-GAS-TIGHT LAYER INCLUDING A METAL OXIDE AS A CROSS-LINKING AGENT

(30) Priorité: 22.12.2010 FR 1061023
(43) Date de publication de la demande: 30.10.2013
(73) Titulaire: MICHELIN Recherche et Technique S.A., 1763 Granges-Paccot (CH); Compagnie Générale des Etablissements Michelin, 63000 Clermont-Ferrand (FR)
(72) Inventeur: RIOU, Aline, F-63040 Clermont-Ferrand Cedex 9 (FR); BIZET, Séverine, F-63040 Clermont-Ferrand Cedex 9 (FR)
(74) Mandataire: Sidhu, Alban
(86) Numéro de dépôt international: PCT/EP2011/072295
(87) Numéro de publication internationale: WO 2012/084550

(56) Documents cités:
- EP-A1- 2 156 948
- EP-A2- 0 419 155
- WO-A1-2009/071122
- DATABASE WPI Week 200941 Thomson Scientific, London, GB; AN 2009-K44684 XP002643543, & JP 2009 132839 A (YOKOHAMA RUBBER CO LTD) 18 juin 2009 (2009-06-18)
- DATABASE WPI Week 200239 Thomson Scientific, London, GB; AN 2002-356839 XP002643544, & JP 2002 060550 A (DENKI KAGAKU KOGYO KK) 26 février 2002 (2002-02-26)

## Description

Le domaine de la présente invention est celui des objets pneumatiques (ou articles gonflables) pourvus d'une couche élastomère étanche aux gaz de gonflage.

Aujourd'hui, la couche étanche aux gaz de gonflage des objets pneumatiques inclut généralement un système de vulcanisation classique combinant du soufre et un accélérateur de vulcanisation. Or, il est connu qu'un tel système pénalise la mise en oeuvre de la composition à cru par le phénomène du grillage. On rappelle que le phénomène dit de "grillage" conduit rapidement, au cours de la préparation des compositions de caoutchouc dans un mélangeur interne, à des vulcanisations prématurées ("*scorching*), à des viscosités à l'état cru très élevées, en fin de compte à des compositions de caoutchouc quasiment impossibles à travailler et à mettre en oeuvre industriellement. Par conséquent, il serait intéressant pour les manufacturiers d'obtenir des compositions ayant un temps de grillage plus important que les compositions actuellement utilisées.

Par ailleurs, la vulcanisation au soufre des couches étanches permet une co-vulcanisation avec la couche adjacente, ce qui induit très bonne adhésion entre ces couches. Cette adhésion est également importante afin que ces couches de ne décollent pas à l'usage.

Il est connu du document JP-2009132839 des compositions pour couches étanches comprenant un butyl bromé, du noir de carbone, 5 pce d'oxyde de zinc et 0,5 pce de soufre. Dans un domaine technique différent, il est également connu du document EP-0419155 une composition d'élastomère thermoplastique pour pièces automobiles, sans charge renforçante, comprenant de l'oxyde de zinc comme agent de réticulation.

A présent, et de manière inattendue, la demanderesse a trouvé une couche d'objet pneumatique étanche aux gaz de gonflage, dont la composition élastomère peut être réticulée sous le seul effet d'un oxyde métallique, c'est-à-dire en l'absence de soufre comme agent vulcanisant. Le temps de grillage de ces compositions est nettement prolongé par rapport à celui d'une composition comportant un système de vulcanisation au soufre. De plus, il a été montré de manière surprenante que la couche réticulée avec un oxyde métallique peut adhérer de manière satisfaisante à une couche vulcanisée classiquement au soufre, permettant une utilisation de ces compositions dans des pneumatiques constitués de couches vulcanisées au soufre et de couches réticulées grâce à un oxyde métallique.

Ainsi, l'invention concerne une couche étanche aux gaz de gonflage dont la composition est à base d'au moins un élastomère halogéné, à un taux supérieur ou égal à 70 parties en poids pour cent parties en poids d'élastomère (pce), une charge renforçante, et un système de réticulation à base d'oxyde métallique, caractérisé en ce que ledit système de réticulation est dépourvu de soufre ou en contient moins de 0,1 pce.

La couche étanche de l'invention permet de faciliter le travail à cru du mélange caoutchouteux grâce à l'augmentation du temps de grillage de la composition.

De manière préférentielle l'invention concerne une couche étanche aux gaz de gonflage telle que définie ci-dessus dans laquelle l'élastomère halogéné est choisi parmi les caoutchoucs butyles halogénés tels que le caoutchouc butyl bromé.

De manière préférentielle également, l'invention concerne une couche étanche aux gaz de gonflage telle que définie ci-dessus dans laquelle le taux de l'élastomère halogéné est supérieur ou égal à 85 pce. Préférentiellement, le taux de l'élastomère halogéné est de 100 pce.

Préférentiellement, l'invention concerne une couche étanche aux gaz de gonflage telle que définie ci-dessus dans laquelle l'oxyde métallique est choisi parmi les oxydes des métaux du groupe II, IV, V, VI, VII ou VIII ou un mélange de ces oxydes métalliques. Plus préférentiellement, l'oxyde métallique est l'oxyde de zinc. En particulier, l'invention concerne une couche étanche aux gaz de gonflage telle que définie ci-dessus dans laquelle le taux d'oxyde métallique est compris dans un domaine variant de 2 à 25 pce.

De préférence, l'invention concerne une couche étanche aux gaz de gonflage telle que définie ci-dessus dans laquelle la charge renforçante est du noir de carbone et/ou de la silice. Préférentiellement, le taux de charge renforçante est compris dans un domaine variant de 30 à 90 pce, de préférence de 35 à 70 pce.

Selon un mode préférentiel, l'invention concerne une couche étanche aux gaz de gonflage telle que définie ci-dessus comprenant en outre une charge inerte. De préférence, la charge inerte est choisie parmi la craie, le graphite, les écailles de verre ou des charges lamellaires à base de silicium telles que les smectites, le kaolin, le talc, le mica, les montmorillonites et la vermiculite, ou un mélange de ces derniers. Préférentiellement, le taux de la charge inerte est compris dans un domaine variant de 2 à 35 pce.

De manière préférentielle, l'invention concerne une couche étanche aux gaz de gonflage telle que définie ci-dessus comprenant en outre un système plastifiant. De préférence, le système plastifiant est choisi parmi les résines hydrocarbonées dont la température de transition vitreuse est supérieure à 20°C et dont la température de ramollissement est inférieure à 170°C, ou parmi les huiles polyisobutylènes de masse moléculaire moyenne en nombre (Mn) comprise entre 200g/mol et 40 000g/mol, ou parmi les mélanges de ces huiles et/ou résines. Préférentiellement, le taux de plastifiant est compris dans un domaine variant de 2 à 50 pce, de préférence de 5 à 25 pce.

Selon un mode de réalisation préféré, l'invention concerne une couche étanche aux gaz de gonflage telle que définie ci-dessus dans laquelle le système de réticulation est dépourvu de soufre.

Alternativement, l'invention concerne un objet pneumatique pourvu d'une couche étanche aux gaz de gonflage tel que défini ci-dessus.

L'invention concerne également un pneumatique pourvu d'une couche étanche aux gaz de gonflage tel que défini ci-dessus.

### I- Rescription de l'invention

L'objet de l'invention concerne donc une couche étanche aux gaz de gonflage, utilisable pour la fabrication de pneumatiques, dont la composition est à base d'au moins un élastomère halogéné, à un taux supérieur ou égal à 70 parties en poids pour cent parties en poids d'élastomère (pce), une charge renforçante, et un système de réticulation à base d'oxyde métallique, caractérisé en ce que ledit système de réticulation est dépourvu de soufre ou en contient moins de 0,1 pce.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

D'une manière équivalente, l'invention concerne préférentiellement une composition telle que définie ci-dessus, dans laquelle la composition est à l'état non réticulé ou à l'état réticulé.

La couche étanche de l'invention comporte deux parois, qui peuvent définir trois domaines : deux « domaines de bord » allant de la paroi jusqu'à environ 20% de l'épaisseur de la couche, vers l'intérieur de ladite couche étanche, et un « domaine central » entre ces deux domaines de bord. Ainsi par l'expression « domaine central » il faut entendre « dans la partie interne de la couche située à plus de 20% de ses bords ».

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### I-1 Elastomère ou caoutchouc

De façon usuelle, on utilise indifféremment dans le texte les termes « élastomère » et « caoutchouc » qui sont interchangeables.

### I-1-a Elastomères halogénés

Par élastomère halogéné, il faut entendre au sens de la présente invention, un élastomère dont la chaîne est modifiée de manière à substituer certains atomes d'hydrogène par des atomes d'halogène. L'atome d'halogène peut être notamment choisi préférentiellement parmi le chlore ou le brome.

Par exemple, l'élastomère peut être choisi dans la famille des caoutchoucs butyles, l'élastomère halogéné correspondant étant un halo-butyle. On citera à titre d'exemples de caoutchouc halo-butyle convenant particulièrement à la réalisation de l'invention : les caoutchoucs chloro-butyles tels que le copolymère chloroisobutylène-isoprène (CIIR) et les caoutchoucs bromo-butyles tels que le copolymère bromoisobutylène-isoprène (BIIR) et parmi ces derniers on peut citer comme exemple de butyles ramifiés, les butyles étoilés halogénés (« halogenated star branched butyl » en anglais, tels que le « Star-branched Bromobutyl 6222 » commercialisé par la société « Exxon ».

Dans la couche étanche selon l'invention, il est important que le taux d'élastomère halogéné soit au moins égal à 70 pce afin que la réticulation aux oxydes métalliques soit efficace. De préférence, le taux d'élastomère halogéné est supérieur ou égal à 80 pce, plus préférentiellement supérieur à 85 pce, plus particulièrement supérieur à 90 pce et de préférence supérieur à 95 pce. Par exemple, et de manière préférentielle également, ce taux peut être de 100 pce.

### I-1-b Autres élastomères de la composition

Lorsque la composition de caoutchouc comprend un taux d'élastomère halogéné inférieur à 100 pce, la matrice élastomérique de la composition est alors un coupage d'élastomère(s) halogéné(s) avec au moins un (c'est-à-dire un ou plusieurs) élastomère non halogéné. En d'autres termes, la composition peut contenir un taux d'élastomère non halogéné compris dans un domaine variant de 0 à 30 pce, préférentiellement de 1 à 20 pce, plus préférentiellement de 5 à 15 pce, par exemple de 10 pce.

Par exemple, ces élastomères sont choisis parmi tous les élastomères non halogénés, ces élastomères peuvent être saturés ou insaturés, naturels ou synthétiques. Ils peuvent notamment être choisi dans le groupe constitué par les caoutchoucs butyles, les élastomères diéniques essentiellement insaturés, les élastomères diéniques essentiellement saturés et les mélanges de ces élastomères. Par exemple, il pourra s'agir d'un élastomère choisi parmi le groupe constitué par le caoutchouc naturel (NR), les polyisoprènes (IR) de synthèse, le caoutchouc butyl (IIR ou polyisobutylène), les polybutadiènes (en abrégé "BR"), les copolymères de butadiène, les copolymères d'isoprène, les copolymères de butadiène-styrène (SBR), les copolymères d'isoprène-butadiène (BIR), les copolymères d'isoprène-styrène (SIR) et les copolymères d'isoprène-butadiène-styrène (SBIR) et les mélanges de ces élastomères.

### I-2 Charge renforçante

On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, ou encore un coupage de ces deux types de charge, notamment un coupage de noir de carbone et de silice.

Tous les noirs de carbone conviennent, notamment les noirs du type HAF, ISAF, SAF conventionnellement utilisés dans les pneumatiques (noirs dits de grade pneumatique). Parmi ces derniers, on citera plus particulièrement les noirs de carbone renforçants tels que les noirs des séries 100 ou 200 (grades ASTM), comme par exemple les noirs N115, N134, N220, ou N234, ou encore, selon les applications visées, les noirs de séries plus élevées de 300 à 900 (par exemple N326, N330, N339, N347, N375, N550, N650, N660, N683, N772, N990). Les noirs de carbone pourraient être par exemple déjà incorporés à l'élastomère sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale quelles que soient sa couleur et son origine (naturelle ou de synthèse), encore appelée charge "blanche", charge "claire" voire "charge non noire" ("*non-black filler*") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices « Ultrasil 7000 » et « Ultrasil 7005 » de la société Degussa, les silices « Zeosil 1165MP », « 1135MP » et « 1115MP » de la société Rhodia, la silice « Hi-Sil EZ150G » de la société PPG, les silices « Zeopol 8715 », « 8745 » et « 8755 » de la Société Huber, les silices à haute surface spécifique telles que décrites dans la demande WO 03/16837.

Lorsque de la silice est présente dans la composition, on peut utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R2 = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Lorsque les compositions de caoutchouc conformes à l'invention contiennent des agents de couplage, de manière connue, leur taux est ajusté selon le taux de silice, il est préférentiellement compris dans un domaine allant de 0,1 à 10 pce, plus préférentiellement de 0,2 à 8 et plus préférentiellement encore de 0,5 à 5 pce.

L'homme du métier comprend qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

L'homme du métier sait adapter en fonction d'une part de la surface spécifique de la charge renforçante et d'autre part selon les applications particulières visées, le taux total de charge renforçante totale (noir de carbone et charge inorganique renforçante telle que silice). En effet, l'optimum est de manière connue différent selon les applications particulières visées: le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel qu'un poids lourd. De manière préférentielle, ce taux est compris dans un domaine allant de 30 à 90 pce, préférentiellement de 30 à 80 pce, plus préférentiellement de 35 à 70 pce. Selon un mode particulier, la charge renforçante contient majoritairement en poids du noir de carbone, c'est-à-dire qu'il représente le plus fort taux en pce parmi les charges renforçantes de la composition, préférentiellement, le noir de carbone représente plus de 50% de la charge renforçante, par exemple à un taux compris dans un domaine variant de 30 à 90 pce, préférentiellement de 30 à 80 pce, plus préférentiellement de 35 à 70 pce.

### I-3 Charges inertes ou non renforçante

De manière optionnelle, les compositions de l'invention peuvent comprendre une charge inerte, ou non renforçante. A la différence des charges renforçante, de taille nanométrique, les charges non renforçante sont de taille micrométrique, ce sont des microparticules. Par exemple, ces charges inertes peuvent être choisies parmi les charges lamellaires ou non telles que la craie, le graphite, les écailles de verre ou des charges lamellaires à base de silicium telles que les smectites, le kaolin, le talc, le mica, les montmorillonites et la vermiculite, ou un mélange de ces derniers.

Les charges inertes précitées sont en effet particulièrement intéressantes car elles permettent d'améliorer l'imperméabilité des compositions dans lesquelles elles sont dispersées avec un taux adéquat. Par exemple, lorsqu'elles sont utilisées, leur taux total peut varier de 2 pce à 35 pce, de préférence de 3 à 25 pce, et notamment de 5 à 20 pce.

Par graphite, on entend de manière générale un ensemble de feuillets hexagonaux non compacts d'atomes de carbone : les graphènes. Le graphite, système cristallin hexagonal, présente un empilement de type ABAB où le plan B est translaté par rapport au plan A.

Le graphite ne peut pas être considéré comme une charge renforçante au sens de la définition précisée dans le paragraphe II-2, cependant il peut être considéré comme une charge semi-renforçante dans la mesure où il permet une augmentation du module en traction d'une composition de caoutchouc dans laquelle il est incorporé.

Lorsqu'il est utilisé, le graphite est présent dans la composition à des taux variant de 2 pce à 35 pce, de préférence de 3 à 25 pce, et notamment de 5 à 20 pce.

Par écailles (ou flocons ou paillettes) de verre (en anglais « glass flakes »), on entend un matériau synthétique sous forme de plaquettes composé majoritairement de silice (SiO₂), et dont la composition peut comprendre entre autres et en outre : K₂O, B₂O₃, ZnO, Na₂O, MgO, CaO, Al₂O₃, TiO₂. Les écailles de verre existent avec différentes caractéristiques selon les applications envisagées, par exemple, pour des hautes résistances chimiques, ou des résistances à la cassure.

Les écailles de verre se présentent sous forme de feuillets unitaires, pour lesquels une large plage de paramètres dimensionnels existent. De par leur procédé de fabrication, les glass flakes peuvent avoir les paramètres dimensionnels contrôlés, et notamment l'épaisseur contrairement au graphite et à d'autres charges lamellaires. La distribution granulométrique des écailles de verre est généralement large car les particules ont une forme irrégulière.

Les compositions selon l'invention utilisent un taux d'écailles de verre variant de 2 pce à 35 pce, de préférence de 3 à 25 pce, et notamment de 5 à 20 pce.

En particulier parmi les charges minérales lamellaires à base de silicium conviennent les phyllosilicates et particulièrement celles comprises dans le groupe constitué par les smectites, le kaolin, le talc, le mica et la vermiculite. Par exemple, lorsqu'elles sont utilisées, leur taux peut varier de 2 pce à 35 pce, de préférence de 3 à 25 pce, et notamment de 5 à 20 pce.

### I-4 Plastifiant

Pour la mise en oeuvre de l'invention, on peut optionnellement utiliser un plastifiant qui est, par exemple, choisi parmi les résines hydrocarbonées dont la température de transition vitreuse est supérieure à 20°C et dont la température de ramollissement est inférieure à 170°C, ou parmi les huiles polyisobutylènes de masse moléculaire moyenne en nombre (Mn) comprise entre 200g/mol et 40 000g/mol, ou parmi les mélanges de ces huiles et/ou résines.

Au total, le taux de plastifiant varie de 2 à 50 pce, préférentiellement de 5 à 25 pce.

### I-4-A Résine thermoplastique

Les compositions de caoutchouc de l'invention peuvent utiliser une résine plastifiante hydrocarbonée dont la Tg, température de transition vitreuse, est supérieure à 20°C et dont la température de ramollissement (en anglais « softening point ») est inférieure à 170°C, comme expliqué en détail ci-après.

De manière connue de l'homme du métier, la dénomination "résine plastifiante" est réservée dans la présente demande, par définition, à un composé qui est d'une part solide à température ambiante (23°C) (par opposition à un composé plastifiant liquide tel qu'une huile), d'autre part compatible (c'est-à-dire miscible au taux utilisé, typiquement supérieur à 5 pce) avec la composition de caoutchouc à laquelle il est destiné, de manière à agir comme un véritable agent diluant.

Les résines hydrocarbonées sont des polymères bien connus de l'homme du métier, miscibles donc par nature dans les compositions d'élastomère(s) lorsqu'elles sont qualifiées en outre de "plastifiantes".

Elles ont été largement décrites dans les brevets ou demandes de brevet cités en introduction du présent mémoire, ainsi que par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods").

Elles peuvent être aliphatiques (par exemple de coupe C5 ou C9), naphténiques, aromatiques ou encore du type aliphatique/ naphténique/ aromatique c'est-à-dire à base de monomères aliphatiques et/ou naphténiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De manière connue, on entend par coupe C5 (ou par exemple respectivement C9) toute fraction issue d'un procédé issu de la pétrochimie ou du raffinage des pétroles, toute coupe de distillation contenant majoritairement des composés ayant 5 (ou respectivement 9 dans le cas d'une coupe C9) atomes de carbone.

De préférence, la résine plastifiante hydrocarbonée présente au moins une, plus préférentiellement l'ensemble, des caractéristiques suivantes :
- une masse moléculaire moyenne en nombre (Mn) comprise entre 400 et 2000 g/mol ;
- un indice de polymolécularité (Ip) inférieur à 3 (rappel : Ip = Mw/Mn avec Mw masse moléculaire moyenne en poids).

La température de transition vitreuse Tg est mesurée de manière connue par DSC (Differential Scanning Calorimetry), selon la norme ASTM D3418 (1999), et la température de ramolissement (« softening point ») est mesurée selon la norme ASTM E-28.

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Selon un mode de réalisation particulièrement préférentiel, la résine plastifiante hydrocarbonée est choisie dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines ; et plus préférentiellement encore, la résine est une résine d'homopolymère ou copolymère de coupe C5 ou de mélange de ces derniers.

Lorsqu'elle est utilisée, le taux de résine hydrocarbonée est préférentiellement compris entre 2 et 35 pce. En dessous du minimum indiqué, l'effet technique visé peut s'avérer insuffisant, alors qu'au-delà du maximum le pouvoir collant des compositions à l'état cru, sur les outils de mélangeage, peut dans certains cas devenir rédhibitoire du point de vue industriel. Le taux de résine hydrocarbonée est encore plus préférentiellement compris entre 5 et 25 pce.

### I-4-B Huile polyisobutylène

Les compositions de caoutchouc de l'invention peuvent utiliser une huile d'extension (ou huile plastifiante) dont la fonction habituelle est de faciliter la mise en oeuvre, par un abaissement de la plasticité Mooney et d'améliorer l'endurance par une diminution des modules d'allongement à cuit.

A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

On utilise conformément à l'invention des huiles polyisobutylènes de masse moléculaire moyenne en nombre (Mn) comprise entre 200g/mol et 40 000g/mol. Pour des masses Mn trop basses, il existe un risque de migration de l'huile à l'extérieur de la composition, tandis que des masses trop élevées peuvent entraîner une rigidification excessive de cette composition. Les huiles polyisobutylènes de basse masse moléculaire précitées ont démontré un bien meilleur compromis de propriétés comparativement aux autres huiles testées, notamment à des huiles conventionnelles du type paraffiniques.

A titre d'exemples, des huiles polyisobutylène sont commercialisées notamment par la société UNIVAR sous la dénomination "Dynapak Poly" (e.g. "Dynapak Poly 190"), par BASF sous les dénominations "Glissopal" (e.g. "Glissopal 1000") ou "Oppanol" (e.g. "Oppanol B12"), par Texas Petro Chemical sous la dénomination « TPC » (« TPC 1350 « ), par Innovene sous la dénomination « INDOPOL ».

La masse moléculaire moyenne en nombre (Mn) de l'huile polyisobutylène est déterminée par SEC, l'échantillon étant préalablement solubilisé dans du tétrahydrofuranne à une concentration d'environ 1 g/L ; puis la solution est filtrée sur filtre de porosité 0,45µm avant injection. L'appareillage est la chaîne chromatographique "WATERS alliance". Le solvant d'élution est le tétrahydrofuranne, le débit de 1 mL/min, la température du système de 35°C et la durée d'analyse de 30 min. On utilise un jeu de deux colonnes "WATERS" de dénomination "STYRAGEL HT6E". Le volume injecté de la solution de l'échantillon de polymère est de 100 µL. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

Les huiles polyisobutylène de basse masse moléculaire convenant pour l'invention peuvent être fonctionnalisées ou pas. Ainsi on peut citer à titre d'exemple non limitatif certaines fonctionnalisations d'huiles polyisobutylène tels que les huiles polyisobutylène succinique anhydre, PIBSA, ou les huiles polyisobutylène succinimides, PIBSI.

Lorsqu'elle est utilisée, le taux d'huile polyisobutylène est préférentiellement compris entre 2 et 35 pce. En dessous du minimum indiqué, la couche ou composition élastomère risque de présenter une rigidité trop forte pour certaines applications tandis qu'au-delà du maximum préconisé, on s'expose à un risque de cohésion insuffisante de la composition et de perte d'étanchéité pouvant être néfaste selon l'application considérée.

Le taux d'huile polyisobutylène est encore plus préférentiellement compris entre 5 et 25 pce.

### I-5 Système de réticulation

On entend par système de réticulation l'agent chimique (ou les agents chimiques) introduit au cours de la phase dite « productive » de la préparation des compositions (voir paragraphe sur la préparation des compositions). Cet agent chimique permet aux chaînes élastomériques de se lier entre elles en formant un réseau tridimensionnel, c'est le phénomène de la réticulation.

Habituellement, pour la réticulation des compositions de couche d'étanchéité, notamment d'objets pneumatiques, on utilise du soufre ou un agent donneur de soufre. Le soufre est habituellement ajouté à un taux préférentiel compris entre 0,5 et 12 pce, en particulier entre 1 et 10 pce. Dans les objets pneumatiques de l'invention, le système de réticulation de la couche d'étanchéité présente un taux de soufre inférieur à 0,1 pce voire nul. Une quantité de soufre, non partie au système de réticulation, est potentiellement présente dans les compositions de l'invention, ce soufre peut provenir des autres ingrédients de la composition, introduits en phase dite « non productive » de la préparation (voir ci-dessous le paragraphe sur la préparation des compositions). Par exemple, il peut provenir du noir de carbone ou de l'agent de couplage tels que décrits ci-dessus. Dans les compositions de l'invention, le taux de soufre dans la composition est inférieur à 2 pce, préférentiellement inférieur à 1,5 pce dans le domaine central de la couche étanche.

L'absence de soufre ou son taux inférieur à 0,1 pce dans le système de réticulation des couches d'étanchéité de l'invention permet d'augmenter le temps de fixation (ou temps de grillage) de la composition, diminuant ainsi le phénomène de grillage. Par ailleurs, on a montré que, de manière surprenante, la couche caoutchouteuse ainsi réticulée possède une bonne adhésion à une couche adjacente vulcanisée au soufre.

Le système de réticulation utile pour la mise en oeuvre de l'invention, est à base d'oxyde métallique, il est par ailleurs dépourvu de soufre ou en contient un taux inférieur à 0,1 pce et de manière très préférentielle, le système de réticulation est dépourvu de soufre. Préférentiellement, ce système de réticulation est dépourvu de tout agent de réticulation usuel autre qu'un oxyde métallique (tel que le soufre ou les peroxydes), ou en contient moins de 0,5 pce (préférentiellement moins de 0,3 pce, plus préférentiellement moins de 0,1 pce).

Préférentiellement, l'oxyde métallique comprend un métal du groupe II, IV, V, VI, VII ou VIII et de l'oxygène. Par exemple, l'oxyde métallique peut être choisi parmi : FeO, Fe₂O₃, Fe₃O₄, CoO, Co₂O₃, NiO, PbO, Pb₃O₄, PbO₂, Sb₂O₃, Sb₂O₅, V₂O₅, CrO₂, MoO₂, WO₂, BeO, MgO, MnO, ZnO, CaO, GeO, TiO, TiO₂, Ti₂O₃, Ti₃O₅, SnO, SnO₂, SrO, BaO. Préférentiellement, l'oxyde métallique est choisi parmi : Fe₂O₃, MgO, ZnO, PbO, TiO₂, et très préférentiellement, l'oxyde métallique est ZnO.

Le taux d'oxyde métallique dans le système de réticulation (en d'autres termes, le taux d'oxyde métallique du système de réticulation dans la composition) est de préférence compris dans un domaine variant de 2 à 25 pce, préférentiellement de 2 à 20 pce. De préférence, le taux d'oxyde métallique est compris dans un domaine variant de 3 à 15 pce pour un oxyde métallique ayant une surface spécifique BET (mesurée selon la norme ISO 4652) d'environ 4.5m²/g. Pour des oxydes métalliques plus réactifs tels que ceux ayant une surface spécifique BET > à 4,5m²/g (exemple 9,5m²/g ou 45m²/g), on peut descendre jusqu'à un taux de 2 pce, en obtenant des propriétés équivalentes. A contrario, pour un oxyde métallique, et notamment de l'oxyde de zinc, ayant une surface spécifique plus faible, ce taux pourra être augmenté.

On peut ajouter un ou plusieurs accélérateurs de réticulation et/ ou agents activateurs de réticulation. L'accélérateur de réticulation est utilisé à un taux préférentiel compris entre 0,2 et 10 pce, plus préférentiellement compris entre 0,3 et 6,0 pce. Parmi ces composés, citons les acides gras tels que l'acide stéarique, ou les dérivés guanidiques (en particulier la diphénylguanidine). On peut également utiliser des accélérateurs du type thiazoles ainsi que leurs dérivés, des accélérateurs de types thiurames, carbamates, sulfénamides. Ces accélérateurs sont par exemple choisis dans le groupe constitué par le disulfure de 2-mercaptobenzothiazyle (en abrégé "MBTS"), le disulfure de tetrabenzylthiurame (TBzTD), le N-cyclohexyl-2-benzothiazyle sulfénamide (CBS), le N,N-dicyclohexyl-2-benzothiazyle sulfénamide (DCBS), le N-ter-butyl-2-benzothiazyle sulfénamide (TBBS), le N-ter-butyl-2-benzothiazyle sulfénimide (TBSI), le dibenzyldithiocarbamate de zinc (ZBEC) et les mélanges de ces composés. Bien entendu, dans le cas où les accélérateurs utilisés sont une source de soufre (par exemple MTBS ou TBzTD), leur taux est adapté de manière à ce que le taux total de soufre ne dépasse pas 0,5 pce. De préférence, la couche d'étanchéité selon l'invention peut contenir un accélérateur à l'exception de ceux qui sont également des donneurs de soufre. Plus préférentiellement, la couche d'étanchéité selon l'invention ne contient pas d'accélérateur. En d'autres termes, en l'absence d'activateur et/ou d'accélérateur, le système de réticulation peut être constitué uniquement d'oxyde métallique.

### I-6 Additifs divers

Les compositions de caoutchouc conformes à l'invention peuvent comporter également tout ou partie des additifs usuels habituellement utilisés dans les compositions d'élastomères destinées à la fabrication de pneumatiques, en particulier de couches d'étanchéité, comme par exemple des agents de protection tels que cires anti-ozone, des anti-ozonants chimiques, des anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269.

Ces compositions peuvent également contenir, en complément des agents de couplage, des activateurs de couplage, des agents de recouvrement de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des α,ω -dihydroxy-polyorganosiloxanes (notamment des α,ω-dihydroxy-polydiméthylsiloxanes), des acides gras comme par exemple l'acide stéarique.

### II- Préparation des compositions

Les compositions sont fabriquées dans des mélangeurs appropriés, en utilisant deux phases de préparation successives bien connues de l'homme du métier : une première phase de travail ou malaxage thermomécanique à haute température, jusqu'à une température maximale comprise entre 110°C et 190°C, de préférence entre 115°C et 150°C et plus préférentiellement encore entre 115°C et 140°C (notamment lorsque la composition est à base d'un élastomère butyl halogéné) suivie d'une seconde phase de travail mécanique jusqu'à une plus basse température, typiquement inférieure à 110°C, par exemple entre 40°C et 100°C, phase de finition au cours de laquelle est incorporé le système de réticulation.

Le procédé pour préparer une composition de caoutchouc pour couche étanche aux gaz de gonflage, comporte les étapes suivantes :
- incorporer à un élastomère halogéné, au cours d'une première étape, au moins une charge renforçante, en malaxant thermomécaniquement le tout, en une ou plusieurs fois, jusqu'à atteindre une température maximale comprise entre 110°C et 190°C ; (cette phase de préparation est appelée phase « non-productive »).
- incorporer ensuite, au cours d'une seconde étape, le système de réticulation et malaxer le tout jusqu'à une température maximale inférieure à 110°C (cette phase de préparation est appelée phase « productive »).

Ces deux étapes peuvent être réalisées de manière consécutive sur un même mélangeur ou être séparée par une étape de refroidissement à une température inférieure à 100°C, la dernière étape étant alors réalisée sur un deuxième mélangeur.

A titre d'exemple, la première phase est conduite en une seule étape thermomécanique au cours de laquelle on introduit, dans un mélangeur approprié tel qu'un mélangeur interne usuel, dans un premier temps tous les constituants de base nécessaires (élastomère halogéné et charge renforçante), puis dans un deuxième temps, par exemple après une à deux minutes de malaxage, les autres additifs, éventuels agents de recouvrement ou de mise en oeuvre complémentaires, à l'exception du système de réticulation. Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé pendant quelques minutes, par exemple entre 2 et 15 min.

On notera qu'en particulier lorsque l'élastomère majoritaire est choisi parmi les caoutchoucs butyls halogénés, l'incorporation du système de réticulation peut se faire sur le même mélangeur que dans la première phase de travail thermomécanique.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable comme couche d'étanchéité de pneumatique. Lors de cette étape d'extrusion, le temps de fixation des compositions selon l'invention est tel qu'elles supportent un travail à plus haute température, ce qui permet d'augmenter la vitesse de l'extrudeuse et ainsi d'améliorer la productivité de cette extrusion.

La réticulation (ou cuisson) est conduite à une température généralement comprise entre 130°C et 200°C, pendant un temps suffisant qui peut varier par exemple entre 5 et 90 min en fonction notamment de la température de cuisson, du système de vulcanisation adopté et de la cinétique de réticulation de la composition considérée.

L'invention concerne les couches de caoutchouc précédemment décrites tant à l'état dit "cru" (i.e. avant cuisson) qu'à l'état dit "cuit" ou vulcanisé (i.e. après vulcanisation).

L'invention concerne également le procédé de préparation tel que décrit ci-dessus. L'invention concerne préférentiellement un procédé tel que défini ci-dessus, dans lequel ente le malaxage thermomécanique et l'incorporation du système de réticulation, on procède au refroidissement de l'ensemble à une température inférieure ou égale à 100°C.

### III- Exemples

### III-1 Caractérisation des compositions de caoutchouterie

### III-1-a Temps de grillage (ou temps de fixation)

Les mesures sont effectuées à 130°C, conformément à la norme française NF T 43-005. L'évolution de l'indice consistométrique en fonction du temps permet de déterminer le temps de grillage des compositions de caoutchouc, apprécié conformément à la norme précitée par le paramètre T5 (cas d'une grand rotor), exprimé en minutes, et défini comme étant le temps nécessaire pour obtenir une augmentation de l'indice consistométrique (exprimée en UM) de 5 unités au dessus de la valeur minimale mesurée pour cet indice.

### III-1-b Caractéristiques de réticulation : Rhéométrie

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de réticulation. Les mesures sont traitées selon la norme DIN 53529 - partie 2 (mars 1983) :
- ti est le délai d'induction, c'est-à-dire le temps nécessaire au début de la réaction de réticulation;
- tₐₗₚₕₐ (par exemple t₉₀,) est le temps nécessaire pour atteindre une conversion de alpha%, c'est-à-dire alpha% (par exemple 90%) de l'écart entre les couples minimum et maximum.

### III-1-c Viscosité Mooney (ou plasticité Mooney)

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

### III-1-d Tests d'étanchéité

Les valeurs de perméabilité sont mesurées en utilisant un « testeur » de perméabilité MOCON OXTRAN 2/60 à 40°C. Des échantillons cuits sous forme de disques d'une épaisseur déterminée (approximativement 0,8 à 1 mm) sont montés sur l'appareil et rendus étanches avec de la graisse à vide. L'une des faces du disque est maintenue sous 10psi d'azote alors que l'autre face est maintenue sous 10 psi d'oxygène. On contrôle l'augmentation de la concentration en oxygène en utilisant un détecteur à oxygène « Coulox » sur la face maintenue sous azote. On note la concentration en oxygène sur la face maintenue sous azote permettant d'atteindre une valeur constante, utilisée pour déterminer la perméabilité à l'oxygène.

Une valeur arbitraire de 100 est donnée pour la perméabilité à l'oxygène du témoin, un résultat inférieur à 100 indiquant une diminution de la perméabilité à l'oxygène donc une meilleure imperméabilité.

### III-1-e Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation) les modules sécants dits "nominaux" (ou contraintes apparentes, en MPa) à 10% d'allongement (noté "MA10") et 100% d'allongement ("MA100"). Toutes ces mesures de traction sont effectuées dans les conditions normales de température (23±2°C) et d'hygrométrie (50±5% d'humidité relative), selon la norme française NF T 40-101 (décembre 1979). On mesure également les contraintes à la rupture (en MPa) et les allongements à la rupture (en %), à une température de 23°C.

Pour plus de lisibilité les résultats seront indiqués en base 100, la valeur 100 étant attribuée au témoin. Un résultat inférieur à 100 indiquant une diminution de la valeur concernée, et inversement, un résultat supérieur à 100, indiquera une augmentation de la valeur concernée.

### III-2 Caractérisation des pneumatiques

### III-2-a Test de pelage

Le test de pelage qualifie l'adhésion entre deux couches de caoutchouc au sein d'un pneumatique, par exemple entre la couche d'étanchéité interne et la nappe carcasse. L'interface est amorcée, puis décollée à un angle de 180° et à une température de 23°C. La force pour décoller les deux interfaces est enregistrée et la valeur est exprimée en Newton. La préparation de l'enveloppe du pneu se fait en trois étapes : suppression de la tringle, repérage de l'interface étudiée et amorce de décollement de cette interface.

Dans le cas d'élastomères très déformables et d'une adhésion forte entre les deux couches, le test peut résulter en une rupture du matériau avant son décollement de la couche adjacente. Ce résultat indique une bonne adhésion entre les deux couches puisqu'elles ne peuvent être décollées. Ce résultat est noté « rupture » dans les essais présentés ci-dessous.

### III-2-a Test de perte de pression après 4 semaines

Des tests de mesure ont été conduits pour évaluer la perte de pression de pneumatiques après 4 semaines à 20°C.

L'étanchéité des pneumatiques a été mesurée par la mesure de la perte de pression à 20°C après 4 semaines. Les résultats présentés ci-dessous sont présentés en base 100 : une valeur arbitraire de 100 est donnée pour la performance en étanchéité du témoin, un résultat supérieur à 100 indiquant une meilleure performance en étanchéité donc une diminution de la perte de pression après 4 semaines.

### III-2 Exemples de compositions

Les exemples présentés ci-après sont préparés comme indiqué ci-dessus, leur composition est donnée dans le tableau 1, en pce.

**Tableau 1**

| | C1 | C2 | C3 | C4 | C5 | C6 | C7 | C8 | C9 | C10 | C11 | C12 |
|---|---|---|---|---|---|---|---|---|---|---|---|---|
| Butyl bromé (1) | 100 | 100 | 100 | 100 | 100 | 100 | 100 | 100 | 100 | 100 | 100 | 100 |
| N772 | 50 | 50 | 50 | 50 | 50 | 50 | 50 | 50 | 50 | 50 | 50 | 50 |
| Graphite (2) | - | 10 | - | 10 | 10 | 10 | 10 | 10 | 10 | 10 | 10 | 10 |
| Kaolin (3) | 10 | - | 10 | - | - | - | - | - | - | - | - | - |
| Résine (4) | 5 | 7 | 5 | 7 | 7 | 7 | 7 | 7 | 7 | 7 | 7 | 7 |
| ZnO 4,5 m²/g | 1.5 | 1.5 | 6 | 6 | 4 | 8 | 10 | 15 | - | - | 6 | 6 |
| ZnO 9,5 m²/g | - | - | - | - | - | - | - | - | 4 | - | - | - |
| ZnO 45 m²/g | - | - | - | - | - | - | - | - | - | 4 | - | - |
| Soufre | 1.5 | 1.5 | - | - | - | - | - | - | - | - | - | - |
| MBTS | 1.2 | 1.2 | - | - | - | - | - | - | - | - | - | 1 |
| Acide stéarique | 1.5 | 1,5 | 0,5 | 0,5 | 0,5 | 0,5 | 0,5 | 0,5 | 0,5 | 0,5 | - | 0,5 |

| | | | | | | | | | | | | |
|---|---|---|---|---|---|---|---|---|---|---|---|---|
| (1) Polyisobutylène bromé « BROMOBUTYL 2222 » commercialisé par la société EXXON CHEMICAL Co. (2) Graphite naturel « TIMREX 80* 150 » commercialisé par la société TIMCAL (3) Kaolin naturel « Kerbrient SP20 » de la société Imerys (4) Résine aliphatique (pure C5) "Hikorez A-1100", (Tg=49°C, Température de ramollissement 99°C), commercialisée par la société KOLON. | | | | | | | | | | | | |

Les compositions C1 et C2 sont les compositions témoins, elles comportent du soufre comme agent de vulcanisation, la composition C1 est le témoin pour la composition C3 et la composition C2 est le témoin pour les compostions C4 à C12. Les compositions C3 à C12, conformes à l'invention, sont des compositions ne comportant que l'oxyde métallique comme agent de réticulation. Elles varient entre elles par la nature de la charge inerte, le taux d'oxyde métallique, la nature de l'oxyde métallique, la présence ou non d'un accélérateur tel que MTBS et la présence ou non d'un acide gras tel que l'acide stéarique.

### III-3 Propriétés des compositions

### III-3-a. Propriétés l'état à cru et propriétés de cuisson

Les propriétés à l'état cru et les propriétés de cuisson des compositions présentées ci-dessus sont présentées dans le tableau 2 ci-dessous.

**Tableau 2**

| | C1 | C2 | C3 | C4 | C5 | C6 | C7 | C8 | C9 | C10 | C11 | C12 |
|---|---|---|---|---|---|---|---|---|---|---|---|---|
| T5 (min) | 13,2 | 16,7 | 23,1 | 26,5 | 29,1 | 27,0 | 23,8 | 28,9 | 26,7 | 25,0 | 30,6 | 17,6 |
| ti à 150°C (min) | 1,7 | 7,5 | 7,9 | 8,5 | 8,7 | 8,6 | 8,9 | 9,1 | 8,1 | 8,6 | 10,7 | 5,0 |
| t90 à 150°C (min) | 25,2 | 24,5 | 25,3 | 28,3 | 30,0 | 29,4 | 30,2 | 31,3 | 29,2 | 35,2 | 34,5 | 15,4 |
| ML(1+4) 100°C(UM) | 65 | 65 | 68 | 65 | 64 | 65 | 65 | 65 | 65 | 66 | 65 | 64 |

La comparaison des compositions C1 et C3, montre l'augmentation significative des T5 et Ti dans la composition C3 conforme à l'invention par rapport à la composition témoin C1 dont l'agent de réticulation est le soufre. On note par ailleurs, une conservation des propriétés de rhéométrie à T90 et une conservation de la plasticité Mooney, indiquant que les propriétés de mise en oeuvre sont identiques. Avec une charge inerte différente, on peut faire les mêmes observations entre C2 et C4.

La variation du taux d'oxyde métallique dans les compositions C4 à C8, montre que l'on conserve une viscosité Mooney et un T90 satisfaisants, avec un taux d'oxyde métallique variant de 4 à 15 pce. Le changement de surface spécifique de l'oxyde de zinc, utilisé dans les compositions C5, C9 et C10, résulte également en des propriétés conservées avec une viscosité Mooney et un T90 satisfaisants.

Les T5, Ti et T90 à 150°C sont encore davantage augmentés dans la composition C11 par rapport à la composition témoin C2. La viscosité Mooney est conservée.

Dans la composition C12 on ajoute un accélérateur à l'oxyde métallique pour la réticulation. On observe que cet ajout entraîne un T5 toujours augmenté par rapport à la composition C2 et un Ti à 150°C plus faible. L'intérêt de l'ajout d'accélérateur dans la composition devient donc limité quant à l'augmentation du temps de fixation des compositions. En revanche, cet ajout permet de moduler l'effet du changement de système de réticulation. Cette modulation peut s'avérer utile industriellement. Par ailleurs, l'ajout d'accélérateur ne pénalise pas la viscosité Mooney.

### III-3-a. Propriétés à l'état cuit

Les propriétés après cuisson des compositions présentées ci-dessus sont présentées dans les tableaux 3a et 3b ci-dessous.

**Tableau 3a**

| | C1 | C3 |
|---|---|---|
| Perméablilité base 100 | 100 | 92 |
| MA100 base 100 | 100 | 87 |
| Force rupture base 100 | 100 | 92 |
| Allongement rupture base 100 | 100 | 100 |

En comparant les compositions C1 et C3 à cuit, on note une diminution de la perméabilité, ce qui indique une meilleure imperméabilité des couches d'étanchéité selon l'invention. On note également une légère baisse du MA100, et de la force rupture, l'allongement rupture restant identique. Ces propriétés sont bonnes pour une couche d'étanchéité.

**Tableau 3b**

| | C2 | C4 | C5 | C6 | C9 | C10 |
|---|---|---|---|---|---|---|
| Perméablilité base 100 | 100 | 96 | 91 | 100 | 96 | 99 |
| MA100 base 100 | 100 | 93 | 94 | 93 | 91 | 93 |
| Force rupture base 100 | 100 | 89 | 93 | 89 | 89 | 88 |
| Allongement rupture base 100 | 100 | 91 | 94 | 94 | 89 | 90 |

La comparaison du témoin C2 avec les compositions C4, C5, et C9 permet de noter une diminution de la perméabilité, ce qui indique une meilleure imperméabilité des couches d'étanchéité selon l'invention. Les compositions C6 et C10, ont le même niveau d'étanchéité que le témoin. Par ailleurs, les propriétés mécaniques que sont le MA100, la force rupture et l'allongement rupture des compositions selon l'invention sont légèrement inférieures à celles du témoin, ces propriétés restent néanmoins acceptables pour les couches d'étanchéité de l'invention.

### III. 4 Tests de pneumatiques

Des pneumatiques (notés «pneumatique A ») ont été fabriqués, dont la couche interne d'étanchéité est conforme à la composition C4 présentée ci-dessus. Les propriétés de ces pneumatiques sont comparées à celles de pneumatiques (notés « pneumatique témoin ») dont la couche interne d'étanchéité est conforme à la composition C2 présentée ci-dessus.

Les propriétés des compositions présentées ci-dessus sont présentées dans le tableau 4 ci-dessous.

**Tableau 4**

| | Pneumatique témoin | Pneumatique A |
|---|---|---|
| Pelage | rupture | rupture |
| Perte de pression base 100 | 100 | 104 |

Ces essais montrent que les pneumatiques munis d'une couche d'étanchéité selon l'invention présentent des propriétés d'étanchéités améliorées et des propriétés d'adhésion (test de pelage) aussi bonnes que celles de pneumatiques munis d'une couche d'étanchéité vulcanisée au soufre. Ces résultats sont inattendus, et notamment la bonne adhésion de la couche d'étanchéité avec la couche adjacente (par exemple la nappe carcasse). En effet, ces deux couches sont réticulées différemment et possèdent dans l'exemple des compositions élastomériques très différentes, à base de butyl halogéné pour la couche d'étanchéité et à base d'élastomère diénique pour la nappe carcasse.

## Revendications

1. Couche étanche aux gaz de gonflage dont la composition est à base d'au moins un élastomère halogéné, à un taux supérieur ou égal à 70 parties en poids pour cent parties en poids d'élastomère (pce), une charge renforçante, et un système de réticulation à base d'oxyde métallique, **caractérisée en ce que** ledit système de réticulation est dépourvu de soufre ou en contient moins de 0,1 pce.

2. Couche étanche aux gaz de gonflage selon la revendication 1 dans laquelle l'élastomère halogéné est choisi parmi les caoutchoucs butyles halogénés tels que le caoutchouc butyl bromé.

3. Couche étanche aux gaz de gonflage selon l'une quelconque des revendications 1 ou 2 dans laquelle le taux de l'élastomère halogéné est supérieur ou égal à 85 pce.

4. Couche étanche aux gaz de gonflage selon l'une quelconque des revendications 1 ou 2 dans laquelle le taux de l'élastomère halogéné est de 100 pce.

5. Couche étanche aux gaz de gonflage selon l'une quelconque des revendications 1 à 4 dans laquelle l'oxyde métallique est choisi parmi les oxydes des métaux du groupe II, IV, V, VI, VII ou VIII ou un mélange de ces oxydes métalliques.

6. Couche étanche aux gaz de gonflage selon la revendication 5 dans laquelle l'oxyde métallique est l'oxyde de zinc.

7. Couche étanche aux gaz de gonflage selon l'une quelconque des revendications 1 à 6 dans laquelle le taux d'oxyde métallique est compris dans un domaine variant de 2 à 25 pce.

8. Couche étanche aux gaz de gonflage selon l'une quelconque des revendications 1 à 7 dans laquelle la charge renforçante est du noir de carbone et/ou de la silice.

9. Couche étanche aux gaz de gonflage selon l'une quelconque des revendications 1 à 8 dans laquelle le taux de charge renforçante est compris dans un domaine variant de 30 à 90 pce, de préférence de 35 à 70 pce.

10. Couche étanche aux gaz de gonflage selon l'une quelconque des revendications 1 à 9 comprenant en outre une charge inerte.

11. Couche étanche aux gaz de gonflage selon la revendication 10 dans laquelle la charge inerte est choisie parmi la craie, le graphite, les écailles de verre ou des charges lamellaires à base de silicium telles que les smectites, le kaolin, le talc, le mica, les montmorillonites et la vermiculite, ou un mélange de ces derniers.

12. Couche étanche aux gaz de gonflage selon l'une des revendications 10 ou 11 dans laquelle le taux de la charge inerte est compris dans un domaine variant de 2 à 35 pce.

13. Couche étanche aux gaz de gonflage selon l'une quelconque des revendications 1 à 12 comprenant en outre un système plastifiant.

14. Couche étanche aux gaz de gonflage selon la revendication 13 dans laquelle le système plastifiant est choisi parmi les résines hydrocarbonées dont la température de transition vitreuse est supérieure à 20°C et dont la température de ramollissement est inférieure à 170°C, ou parmi les huiles polyisobutylènes de masse moléculaire moyenne en nombre (Mn) comprise entre 200g/mol et 40 000g/mol, ou parmi les mélanges de ces huiles et/ou résines.

15. Couche étanche aux gaz de gonflage selon l'une des revendications 13 ou 14 dans laquelle le taux de plastifiant est compris dans un domaine variant de 2 à 50 pce, de préférence de 5 à 25 pce.

16. Couche étanche aux gaz de gonflage selon l'une quelconque des revendications 1 à 15 dans laquelle le système de réticulation est dépourvu de soufre.

17. Objet pneumatique pourvu d'une couche étanche aux gaz de gonflage selon l'une des revendications 1 à 16.

18. Pneumatique pourvu d'une couche étanche aux gaz de gonflage selon l'une des revendications 1 à 16.

## Patentansprüche

1. Aufpumpgasdichte Schicht, deren Zusammensetzung auf mindestens einem halogenierten Elastomer in einem Gehalt größer gleich 70 Gewichtsteilen pro hundert Gewichtsteile Elastomer (phe), einem verstärkenden Füllstoff und einem Vernetzungssystem auf Metalloxid-Basis basiert, **dadurch gekennzeichnet, dass** das Vernetzungssystem schwefelfrei ist oder weniger als 0,1 phe Schwefel enthält.

2. Aufpumpgasdichte Schicht nach Anspruch 1, wobei das halogenierte Elastomer aus halogenierten Butylkautschuken wie bromiertem Butylkautschuk ausgewählt ist.

3. Aufpumpgasdichte Schicht nach einem der Ansprüche 1 oder 2, wobei der Gehalt des halogenierten Elastomers größer gleich 85 phe ist.

4. Aufpumpgasdichte Schicht nach einem der Ansprüche 1 oder 2, wobei der Gehalt des halogenierten Elastomers 100 phe beträgt.

5. Aufpumpgasdichte Schicht nach einem der Ansprüche 1 bis 4, wobei das Metalloxid aus den Oxiden von Metallen der Gruppe II, IV, V, VI, VII oder VIII oder einer Mischung dieser Metalloxide ausgewählt ist.

6. Aufpumpgasdichte Schicht nach Anspruch 5, wobei es sich bei dem Metalloxid und Zinkoxid handelt.

7. Aufpumpgasdichte Schicht nach einem der Ansprüche 1 bis 6, wobei der Metalloxidgehalt in einem Bereich von 2 bis 25 phe liegt.

8. Aufpumpgasdichte Schicht nach einem der Ansprüche 1 bis 7, wobei es sich bei dem verstärkenden Füllstoff um Ruß und/oder Kieselsäure handelt.

9. Aufpumpgasdichte Schicht nach einem der Ansprüche 1 bis 8, wobei der Gehalt an verstärkendem Füllstoff in einem Bereich von 30 bis 90 phe und vorzugsweise 35 bis 70 phe liegt.

10. Aufpumpgasdichte Schicht nach einem der Ansprüche 1 bis 9, die ferner einen inerten Füllstoff umfasst.

11. Aufpumpgasdichte Schicht nach Anspruch 10, wobei der inerte Füllstoff aus Kreide, Graphit, Glasschuppen oder plättchenförmigen Füllstoffen auf Basis von Silicium wie Smektiten, Kaolin, Talkum, Glimmer, Montmorilloniten und Vermiculit oder einer Mischung dieser Letzteren ausgewählt ist.

12. Aufpumpgasdichte Schicht nach einem der Ansprüche 10 oder 11, wobei der Gehalt des inerten Füllstoffs in einem Bereich von 2 bis 35 phe liegt.

13. Aufpumpgasdichte Schicht nach einem der Ansprüche 1 bis 12, die ferner ein Weichmachersystem umfasst.

14. Aufpumpgasdichte Schicht nach Anspruch 13, wobei das Weichmachersystem aus Kohlenwasserstoffharzen mit einer Glasübergangstemperatur von mehr als 20°C und einer Erweichungstemperatur von weniger als 170°C oder Polyisobutylenölen mit einem zahlenmittleren Molekulargewicht (Mn) zwischen 200 g/mol und 40.000 g/mol oder Mischungen dieser Öle und/oder Harze ausgewählt ist.

15. Aufpumpgasdichte Schicht nach einem der Ansprüche 13 oder 14, wobei der Gehalt an Weichmacher in einem Bereich von 2 bis 50 phe und vorzugsweise 5 bis 25 phe liegt.

16. Aufpumpgasdichte Schicht nach einem der Ansprüche 1 bis 15, wobei das Vernetzungssystem schwefelfrei ist.

17. Pneumatisches Objekt, das mit einer aufpumpgasdichten Schicht nach einem der Ansprüche 1 bis 16 versehen ist.

18. Luftreifen, der mit einer aufpumpgasdichten Schicht nach einem der Ansprüche 1 bis 16 versehen ist.

## Claims

1. Layer airtight to inflation gases, the composition of which is based on at least a halogenated elastomer, having a content of greater than or equal to 70 parts by weight per hundred parts by weight of elastomer (phr), a reinforcing filler and a crosslinking system based on a metal oxide, **characterized in that** said crosslinking system is free of sulphur or contains less than 0.1 phr thereof.

2. Layer airtight to inflation gases according to Claim 1, in which the halogenated elastomer is selected from halogenated butyl rubbers such as brominated butyl rubber.

3. Layer airtight to inflation gases according to either one of Claims 1 and 2, in which the content of the halogenated elastomer is greater than or equal to 85 phr.

4. Layer airtight to inflation gases according to either one of Claims 1 and 2, in which the content of the halogenated elastomer is 100 phr.

5. Layer airtight to inflation gases according to any one of Claims 1 to 4, in which the metal oxide is selected from the oxides of metals from group II, IV, V, VI, VII or VIII or a mixture of these metal oxides.

6. Layer airtight to inflation gases according to Claim 5, in which the metal oxide is zinc oxide.

7. Layer airtight to inflation gases according to any one of Claims 1 to 6, in which the content of metal oxide is within a range varying from 2 to 25 phr.

8. Layer airtight to inflation gases according to any one of Claims 1 to 7, in which the reinforcing filler is carbon black and/or silica.

9. Layer airtight to inflation gases according to any one of Claims 1 to 8, in which the content of reinforcing filler is within a range varying from 30 to 90 phr, preferably from 35 to 70 phr.

10. Layer airtight to inflation gases according to any one of Claims 1 to 9, also comprising an inert filler.

11. Layer airtight to inflation gases according to Claim 10, in which the inert filler is selected from chalk, graphite, glass flakes or platy fillers based on silicon such as smectites, kaolin, talc, mica, montmorillonites and vermiculite, or a mixture of the latter.

12. Layer airtight to inflation gases according to either of Claims 10 and 11, in which the content of the inert filler is within a range varying from 2 to 35 phr.

13. Layer airtight to inflation gases according to any one of Claims 1 to 12, also comprising a plasticizing system.

14. Layer airtight to inflation gases according to Claim 13, in which the plasticizing system is selected from hydrocarbon-based resins, the glass transition temperature of which is above 20°C and the softening point of which is below 170°C, or from polyisobutylene oils having a number-average molecular weight (Mn) between 200 g/mol and 40 000 g/mol, or from mixtures of these oils and/or resins.

15. Layer airtight to inflation gases according to either of Claims 13 and 14, in which the content of plasticizer is within a range varying from 2 to 50 phr, preferably from 5 to 25 phr.

16. Layer airtight to inflation gases according to any one of Claims 1 to 15, in which the crosslinking system is free of sulphur.

17. Pneumatic object provided with a layer airtight to inflation gases according to one of Claims 1 to 16.

18. Tyre provided with a layer airtight to inflation gases according to one of Claims 1 to 16.
